# EUROPÄISCHE PATENTSCHRIFT

(11) **EP 0 522 467 B1**
(45) Veröffentlichungstag und Bekanntmachung des Hinweises auf die Patenterteilung: **07.10.1998**
(21) Anmeldenummer: 92111328.8
(22) Anmeldetag: 03.07.1992
(51) Int. Cl.: C08F 220/06, D06P 1/52

(54) **Verfahren zur Herstellung vernetzter Copolymerisate auf Basis von Acrylsäure oder Methacrylsäure und ihre Verwendung**
Process for the preparation of crosslinked copolymers based on acrylic or methacrylic acid and their use
Procédé pour la préparation des copolymères réticulés à base d'acide acrylique ou méthacrylique et leur usage

(30) Priorität: 12.07.1991 DE 4123049
(43) Veröffentlichungstag der Anmeldung: 13.01.1993
(73) Patentinhaber: BASF Aktiengesellschaft, 67063 Ludwigshafen (DE)
(72) Erfinder: Uhl, Günter, W-6520 Worms 1 (DE); Grund, Norbert, Dr., W-6700 Ludwigshafen (DE); Schneider, Reinhard, Dr., W-6701 Fussgoenheim (DE); Schermann, Ingeborg, Dr., W-6053 Obertshausen (DE); Niessner, Manfred, Dr., W-6707 Schifferstadt (DE); Hartmann, Heinrich, Dr., W-6703 Limburgerhof (DE)

(56) Entgegenhaltungen:
- FR-A- 2 386 564
- CHEMICAL ABSTRACTS, vol. 92, no. 10, M rz 1980, Columbus, Ohio, US; abstract no. 77354, 'COPOLYMERS HAVING LARGE SWELLING RATIOS IN WATER' Seite 30 ;Spalte 1 ;

## Beschreibung

Die Erfindung betrifft ein Verfahren zur Herstellung von vernetzten Copolymerisaten mit vernetzbaren Gruppen auf der Basis von Acrylsäure oder Methacrylsäure, die dadurch erhältlich sind, daß man Acrylsäure und/oder Methacrylsäure mit mit mindestens einer vernetzbaren monoethylenisch ungesättigten Verbindung in Gegenwart von 50 bis 10000 ppm, bezogen auf die Monomeren, eines mindestens bifunktionellen Vernetzers und gegebenenfalls anderen monoethylenisch ungesättigten Monomeren in Gegenwart von Radikale bildenden Polymerisationsinitiatoren in der wäßrigen Phase einer Wasser-in-Öl-Emulsion polymerisiert, und die Verwendung der Copolymerisate als Verdickungsmittel für Textildruckpasten.

Im Textildruck mit Pigmenten benötigt man zur Herstellung der Druckpasten als wesentliche Hilfsmittel Verdickungsmittel sowie Bindemittel. Die Echtheiten der Drucke werden hauptsächlich von der Qualität des in der Druckpaste eingesetzten Bindemittels bestimmt. Vor allem beim Druck auf synthetischen Fasern, auf Regeneratcellulose und auf Mischungen dieser Fasern mit Cellulosefasern können die bekannten Bindemittel die Anforderungen an die Echtheit der Drucke nicht vollständig erfüllen. Um dennoch Drucke mit zufriedenstellenden Echtheiten zu erhalten, war es bisher üblich, den Pigmentdruckpasten als weiteres Hilfsmittel einen Fremdfixierer zuzusetzen. Produkte dieser Art sind beispielsweise in Ullmanns Enzyklopädie der technischen Chemie, 4. Auflage, Band 22, Seiten 629 bis 630 (1982) und Band 23, Seite 68 (1983) beschrieben. Es handelt sich hierbei meist um Poly-N-Methylolderivate des Melamins, vorzugsweise um ein mit Methanol oder anderen niedermolekularen ein- oder zweiwertigen Alkoholen verethertes Hexahydroxymethylmelamin. Der Zusatz solcher Verbindungen zu Pigmentdruckpasten bedeutet eine Verteuerung der Rezepturen und beeinflußt die Eigenschaften der mit diesen Pigmentdruckpasten herstellbaren Drucke meistens nachteilig, weil das damit bedruckte Gewebe einen härteren Griff aufweist. Zusätzliche Nachteile, die der Einsatz dieser Verbindungen mit sich bringt, sind die hohen Formaldehydwerte auf dem bedruckten Gewebe.

Bindemittel für Pigmentdruckpasten sind beispielsweise aus der DE-B-12 57 736 und der EP-A-209 029 bekannt. Wesentliches Merkmal dieser Bindemittel ist der Gehalt an vernetzbaren Monomeren des Typs N-Methylolacrylamid, N-Methylolmethacrylamid und/oder der mit einem C₁-C₄-Alkohol veretherten Methylolverbindungen. Bindemittel, die diese vernetzbaren Monomeren nicht enthalten, wie sie z.B. in DE-A-35 29 530 beschrieben sind, führen zu Drucken mit schlechten Reib- und Waschechtheiten. Dieser Nachteil läßt sich teilweise dadurch korrigieren, daß deutlich erhöhte Mengen an Fremdvernetzer eingesetzt werden müssen. Dadurch treten deren oben angeführten Nachteile in besonders starkem Maße auf.

Verdickungsmittel, die gegenüber Salzen stabil sind, werden in der GB-A-2 017 159 beschrieben. Sie werden im Textildruck eingesetzt und bestehen im wesentlichen aus nichtionischen, vernetzten Copolymerisaten aus Acrylamid, Methacrylamid oder N-Vinylpyrrolidon. Aus der EP-A-0 383 057 sind Verdickungsmittel für den Textildruck bekannt, die durch Wasser-in-Öl-Emulsionspolymerisation von olefinisch ungesättigten Carbonsäuren mit olefinisch ungesättigten Nitrilen in Gegenwart von Vernetzern hergestellt werden. Aus der DE-B-36 41 700 ist ein Verfahren zur Herstellung von Wasser-in-Öl-Emulsionen vernetzter, wasserquellbarer Polymerisate bekannt, bei dem man wasserlösliche ethylenisch ungesättigte Monomere mit 100 bis 5000 ppm, bezogen auf die Monomermischung, eines mindestens bifunktionellen Vernetzers in der wäßrigen Phase einer Wasser-in-Öl-Emulsion in Gegenwart eines Wasser-in-Öl-Emulgators und zusätzlich eines Netzmittels mit einem HLB-Wert von mindestens 10 unter Verwendung von wasserlöslichen Polymerisationsinitiatoren polymerisiert. Die so erhältlichen Wasser-in-Öl-Emulsionen werden als Verdickungsmittel für Textildruckpasten verwendet. Die Echtheiten von Textildrucken, die unter Verwendung von Textildruckpasten hergestellt werden, die ein bekanntes Verdickungsmittel enthalten, sind noch verbesserungsbedürftig. Um beim Einsatz dieser Verdickungsmittel in Druckpasten ausreichende Echtheiten der bedruckten Textilien zu erreichen, muß man - wie oben bereits dargelegt - einen Fremdvernetzer mitverwenden. Dadurch wird jedoch der Griff der bedruckten Textilien nachteilig beeinflußt und man erhält Drucke mit hohen Formaldehydwerten.

Der vorliegenden Erfindung liegt die Aufgabe zugrunde, neue Stoffe zur Verfügung zu stellen. Eine weitere Aufgabe der Erfindung besteht darin, ein verbessertes Verdickungsmittel für den Textildruck zur Verfügung zu stellen.

Die Aufgaben werden erfindungsgemäß gelöst mit einem Verfahren zur Herstellung von vernetzten Copolymerisaten auf der Basis von Acrylsäure oder Methacrylsäure, wenn man
(a) 50 bis 99 Gew.-Teile Acrylsäure und/oder Methacrylsäure,
(b) 1 bis 50 Gew.-Teile mindestens einer Verbindung der Formel 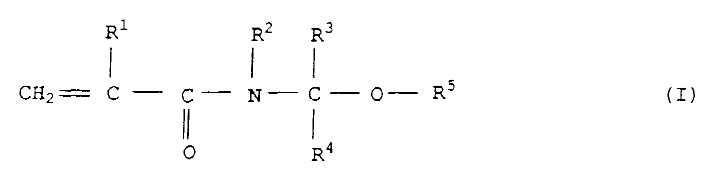 in der
   R¹ = H, CH₃
   R² = H, CH₃, 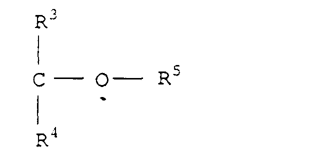
   R^{3'}R⁴ = H, CH₃, OH, O-R⁵, COOH,
   R⁵ = H, C₁- bis C₈-Alkyl, -CH₂-COOH, -(CH₂-CH₂-O)ₙ-H, 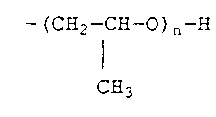 und
   n = 1 bis 20 bedeuten,
(c) 50 bis 10000 ppm, bezogen auf die Monomeren (a) und (b), eines mindestens bifunktionellen Vernetzers und
(d) 0 bis 49 Gew.-Teile anderen monoethylenisch ungesättigten Monomeren
in der wäßrigen Phase einer Wasser-in-Öl-Emulsion in Gegenwart mindestens eines Wasser-in-Öl-Emulgators und mindestens eines Radikale bildenden Polymerisationsinitiators zu Wasser-Öl-Polymeremulsionen mit einem mittleren Durchmesser der Polymerteilchen von 0,1 bis 20 µm polymerisiert. Die vernetzbaren Copolymerisate enthalten vernetzbare Gruppen einpolymerisiert und werden als Verdickungsmittel für Textildruckpasten verwendet.

Die vernetzten Copolymerisate enthalten als Komponente (a) 50 bis 99, vorzugsweise 70 bis 95 Gew.-Teile Acrylsäure, Methacrylsäure oder Mischungen aus Acrylsäure und Methacrylsäure in jedem beliebigen Verhältnis in einpolymerisierter Form.

Als Komponente (b) der vernetzten Copolymerisate kommen Verbindungen der allgemeinen Formel 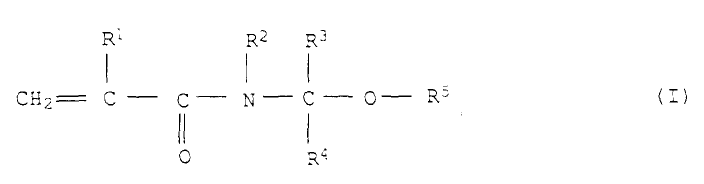 in Betracht, in der
R¹ = H, CH₃
R² = H, CH₃, 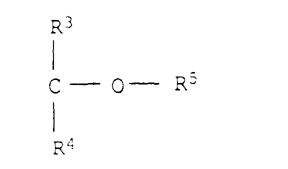
R³, R⁴ = H, CH₃, OH, O-R⁵, COOH,
R⁵ = H, C₁- bis C₈-Alkyl, -CH₂-COOH, -(CH₂-CH₂-O)ₙ-H, 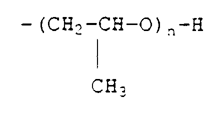 und
n = 1 bis 20 bedeuten.

Geeignete Monomere der Formel I, die die Vernetzbarkeit der Copolymerisate bewirken, sind beispielsweise N-Methylolacrylamid, N-Methylolmethacrylamid, N-(Methoxymethyl)acrylamid, N-(Methoxymethyl)methacrylamid, N-(Ethoxymethyl)methacrylamid, N-(n-Propoxymethyl)acrylamid, N-(n-Propoxymethyl)methacrylamid, N-(n-Butoxymethyl)acrylamid, N-(n-Butoxymethyl)methacrylamid und Acrylamidohydroxyessigsäure-Monohydrat. Die Verbindungen der Komponente (b) können entweder allein oder in Mischung bei der Copolymerisation eingesetzt werden. Beispielsweise kann man als Komponente (b) eine Mischung aus N-Methylolacrylamid und N-Methoxymethylacrylamid zusammen mit den Comonomeren der anderen Gruppen der Copolymerisation unterwerfen. Die Monomeren der Gruppe (b) werden in Mengen von 1 bis 50, vorzugsweise von 5 bis 30 Gew.-Teilen bei der Copolymerisation eingesetzt. Vorzugsweise verwendet man von den Monomeren der Komponente (b) N-Methylolacrylamid, N-Methylolmethacrylamid sowie die mit einwertigen C₁- bis C₄-Alkoholen partiell oder vollständig veretherten N-Methylol(meth)acrylamide.

Die Copolymerisate mit vernetzbaren Gruppen enthalten als weitere wesentliche Komponente 50 bis 10000, vorzugsweise 300 bis 5000 ppm, bezogen auf die Monomeren (a) und (b), eines mindestens bifunktionellen Vernetzers. Geeignete Vernetzer sind beispielsweise N,N'-Methylenbisacrylamid, Polyethylenglykoldiacrylate und Polyethylenglykoldimethacrylate, die sich jeweils von Polyethylenglykolen eines Molekulargewichts von 126 bis 8500 ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acrylsäure oder Methacrylsäure veresterte Anlagerungsprodukte von Ethylenoxid und/oder Propylenoxid an Trimethylolpropan, mindestens zweifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether, Trimethylolpropandiallylether, Polyethylenglykoldivinylether, Butandioldivinylether, Pentaerythrittriallylether und/oder Divinylethylenharnstoff und/oder Triallylmonoalkylammoniumsalze, wie z.B. Triallylmethylammoniumchlorid. Vorzugsweise setzt man wasserlösliche Vernetzer ein, z.B. N,N'-Methylen-bisacrylamid, Polyethylenglykoldiacrylate, Polyethylenglykoldimethacrylate, Pentaerythrittriallylether und/oder Divinylharnstoff.

Die vernetzten Copolymerisate mit vernetzbaren Gruppen können gegebenenfalls als Komponente (d) andere monoethylenisch ungesättigte Monomere einpolymerisiert enthalten. Besonders bevorzugt setzt man als Monomere der Komponente (d) wasserlösliche monoethylenisch ungesättigte Verbindungen ein, z.B. 2-Acrylamido-2-methyl-propansulfonsäure, Styrolsulfonsäure, Vinylsulfonsäure, 2-Sulfoethylmethacrylat, Styrolphosphonsäure, Vinylphosphonsäure, Itaconsäure, Maleinsäure, Fumarsäure, Acrylamid, Methacrylamid, N-Vinylpyrrolidon, N-Vinylformamid, N-Vinylimidazol, N-Vinylimidazolin, 2-Methyl-l-vinylimidazolin und Acrylnitril. Falls man die Monomeren der Gruppe (d) bei der Copolymerisation einsetzt, so können sie dabei in Mengen bis zu 49, vorzugsweise bis zu 25 Gew.-Teilen anwesend sein.

Als geeignete Radikale bildende Polymerisationsinitiatoren können sämtliche üblicherweise eingesetzte Polymerisationsinitiatoren verwendet werden. Bevorzugt sind wasserlösliche Initiatoren, wie Alkali- oder Ammoniumperoxidisulfate, Wasserstoffperoxid, Diacetylperoxidicarbonat, Dicyclohexylperoxidicarbonat, tert.-Butylperpivalat, Dilauroylperoxid, Dibenzoylperoxid, tert.-Butylper-2-ethylhexanoat, tert.-Butylpermaleinat, Bis(tert.-butylperoxi) -cyclohexan, tert.-Butylperacetat, Dicumylperoxid, Di-tert.-amylperoxid, Di-tert.-butylperoxid, Cumylhydroperoxid, tert.-Butylhydroperoxid und p-Menthanhydroperoxid sowie Azoinitiatoren, wie 2,2'-Azobis(2-methyl-N-phenylpropionamidin) dihydrochlord, 2,2'-Azobis (2-methylpropionamidin) dihydrochlorid, 2,2' -Azobis(2,4-dimethylvaleronitril), 2,2'-Azobis-(isobutyronitril), 2,2'-Azobis(2-amidinopropan)dihydrochloridund 2,2'-Azobis-[2- (2-imidazolin-2-yl)propan] -dihydrochlorid. Bevorzugte Initiatoren sind Alkali- und Ammoniumpersulfate, tert.-Butylperpivalat, tert.-Butylper-2-ethylhexanoat, 2,2' -Azobis-(2,4-dimethylvaleronitril), 2,2'-Azobis(2-amidinopropan)dihydrochlorid, Azobis-(isobutyronitril) und 2,2'-Azobis[2-(2-imidazolin-2-yl)propan]dihydrochlorid. Man kann entweder einen einzigen Initiator oder auch Mischungen mehrerer Initiatoren verwenden. Die Auswahl der Initiatoren richtet sich in erster Linie nach der Temperatur, bei der die Polymerisation durchgeführt wird. Man kann auch zusätzliche Salze von Schwermetallen, z.B. Kupfer-, Kobalt-, Mangan-, Eisen-, Nickel- und Chromsalze und/oder organische Verbindungen, wie Benzoin, Dimethylanilin, Ascorbinsäure sowie Reduktionsmittel, wie beispielsweise Alkalidisulfit oder Formaldehydnatriumsulfoxylat zusammen mit mindestens einem der oben angegebenen Radikale bildenden Polymerisationsinitiatoren einsetzen. Solche Mischungen von Initiatoren ermöglichen das Polymerisieren bei niedrigen Temperaturen. Die reduzierende Komponente von sogenannten Redox-Initiatoren kann beispielsweise von Natriumsulfit, Natriumbisulfit, Natriumformaldehydsulfoxylat oder Hydrazin gebildet werden. Bezogen auf die bei der Polymerisation eingesetzten Monomeren benötigt man 100 bis 10.000, vorzugsweise 100 bis 2000 ppm eines Polymerisationsinitiators oder einer Mischung mehrerer Polymerisationsinitiatoren. Die angegebenen Initiatormengen entsprechen etwa 0,003 bis 0,3 Mol.% Initiator, bezogen auf die eingesetzten Monomeren.

Die Monomeren der Komponenten (a), (b), (c) und gegebenenfalls (d) können nach allen bekannten Verfahren copolymerisiert werden. Bevorzugt sind jedoch die Verfahren, bei denen man die genannten Monomeren in der wäßrigen Phase einer Wasser-in-Öl-Emulsion in Gegenwart mindestens eines Wasser-in-Öl-Emulgators und mindestens eines Radikale bildenden Polymerisationsinitiators der Polymerisation unterwirft. Von diesen Verfahren ist besonders die Wasser-in-Öl-Polymerisation bevorzugt, bei der man Wasser-in-Öl-Polymeremulsionen mit einem mittleren Durchmesser der Polymerteilchen von 0,1 bis 20 µm erhält. Die wäßrige Monomerlösung, die der Polymerisation unterworfen wird, hat Monomerkonzentrationen von 20 bis 80, vorzugsweise 30 bis 60 Gew.-%. Die wäßrige Lösung wird bei dem bevorzugten Polymerisationsverfahren unter Bildung einer Wasser-in-Öl-Emulsion in einer hydrophoben Flüssigkeit (Ölphase) emulgiert und dann in Gegenwart eines oder mehrerer Polymerisationsinitiatoren polymerisiert, die unter den Polymerisationsbedingungen freie Radikale bilden.

Als Ölphase kommen alle inerten hydrophoben Flüssigkeiten in Betracht, die sich praktisch nicht in Wasser lösen und die nicht in die Polymerisation störend eingreifen. Vorzugsweise verwendet man aliphatische oder aromatische Kohlenwasserstoffe oder Mischungen von Kohlenwasserstoffen. Geeignete aliphatische Kohlenwasserstoffe sind lineare, verzweigte und cyclische Alkane oder deren Mischungen, beispielsweise Pentan, Hexan, Heptan, Octan, Nonan, Decan, Cyclohexan, Decalin, Methylcyclohexan, Isooctan und Ethylcyclohexan. Aromatische Kohlenwasserstoffe, die als hydrophobe Flüssigkeit in Betracht kommen sind beispielsweise Toluol, Xylol und Isopropylbenzol. Daneben ist es selbstverständlich auch möglich, halogenierte Kohlenwasserstoffe, wie Tetrachlorethan, Hexachlorethan, Trichlorethan und Chlorbenzol zu verwenden. Der Siedebereich der einsetzbaren Kohlenwasserstoffe ist breit variierbar und liegt bei 50 bis 350°C. Der Anteil der Ölphase am Aufbau der Wasser-in-Öl-Emulsion beträgt 15 bis 70, vorzugsweise 20 bis 50 Gew.-%.

Um die wäßrige Monomerlösung in der Ölphase zu dispergieren, verwendet man die dafür bekannten Wasser-in-Öl-Emulgatoren. Hierbei handelt es sich beispielsweise um Sorbitanester, wie Sorbitanmonostearat, Sorbitanmonooleat, Sorbitanpalmitat und Sorbitanlaurat sowie um Glycerinester, deren Säurekomponente sich von C₁₄- bis C₂₀-Carbonsäuren ableitet. Weitere geeignete Emulgatoren sind die aus der DE-PS 25 57 324 bekannten Wasser-in-Öl-Emulgatoren, die erhältlich sind durch Umsetzung von
A) C₁₀-C₂₂-Fettalkoholen mit Epichlorhydrin im Molverhältnis 1:0,5 bis 1:1,5 zu Glycidylethern,
B) Reaktion der Glycidylether mit (1) gesättigten, 2 bis 6 OH-Gruppen enthaltenden C₂-C₆-Alkoholen oder (2) deren Monoether mit C₁₀-C₂₂-Fettalkoholen, im Molverhältnis Glycidylether zu (1) oder (2) von 1:0,5 bis 1:6 in Gegenwart von Säuren oder Basen und
C) Alkoxylierung der Reaktionsprodukte gemäß (B) mit mindestens einem C₂-C₄-Alkylenoxid im Molverhältnis 1:1 bis 1:6.

Die in Betracht kommenden Wasser-in-Öl-Emulgatoren haben einen HLB-Wert von höchstens 8. Unter HLB-Wert versteht man die hydrophile-lipophile Balance des Emulgators, vgl. W.C. Griffin, J. Soc. Cosmet. Chem. Band 1, 311 (1949). Die Wasser-in-Öl-Emulgatoren werden, bezogen auf die eingesetzten Monomeren, in einer Menge von 2 bis 20, vorzugsweise 5 bis 15 Gew.-% eingesetzt. Vorzugsweise werden diejenigen Wasser-in-Öl-Emulgatoren eingesetzt, die in der genannten DE-PS 25 57 324 beschrieben sind.

In einer bevorzugten Ausführungsform der Erfindung wird die Copolymerisation der wasserlöslichen Monomeren zusätzlich in Gegenwart mindestens eines Öl-in-Wasser-Emulgators durchgeführt. Der Einsatz dieser Gruppe von Emulgatoren ermöglicht die Herstellung besonders feinteiliger und sedimentationsstabiler Wasser-in-Öl-Polymeremulsionen. Geeignete Öl-in-Wasser-Emulgatoren sind beispielsweise sämtliche Netzmittel, die einen HLB-Wert von mindestens 10 haben. Bei dieser Gruppe von Emulgatoren handelt es sich im wesentlichen um hydrophile wasserlösliche Verbindungen, wie ethoxylierte Alkylphenole oder ethoxylierte Fettalkohole. Produkte dieser Art werden beispielsweise dadurch erhalten, daß man C₈- bis C₁₂-Alkylphenole oder C₈- bis C₂₂-Fettalkohole mit Ethylenoxid und gegebenenfalls Propylenoxid und/oder Butylenoxid umsetzt. Vorzugsweise ethoxyliert man C₁₂- bis C₁₈-Fettalkohole. Das Molverhältnis von Alkylphenol bzw. Fettalkohol zu Ethylenoxid beträgt dabei im allgemeinen 1:5 bis 1:20. Weitere geeignete Emulgatoren sind beispielsweise alkoxylierte Fettamine. Falls Emulgatoren mit einem HLB-Wert von 10 oder darüber bei der Polymerisation eingesetzt werden, so betragen die angewendeten Mengen 1 bis 20, vorzugsweise 2 bis 15 Gew.-%, bezogen auf die zu polymerisierenden Monomeren.

Der pH-Wert der wäßrigen Monomerlösungen, die zur Polymerisation eingesetzt werden, kann gegebenenfalls durch Zusatz einer Base angehoben werden. Der pH-Wert der wäßrigen Monomerlösungen kann zwischen 3 und 13 betragen und liegt bevorzugt in dem Bereich von 6 bis 11,5. Sofern man zur Neutralisation eine Base zusetzt, verwendet man vorzugsweise Alkalimetallbasen, wie Natronlauge oder Kalilauge, sowie Ammoniak oder Amine, z.B. Methylamin, Dimethylamin, Trimethylamin, Ethanolamin, Diethanolamin, Triethanolamin oder Morpholin. Die Neutralisation bzw. partielle Neutralisation der Säuregruppen der Monomeren, die zur Polymerisation eingesetzt werden, kann jedoch auch mit Hilfe von wäßriger Sodalösung oder durch Zugabe von Natriumhydrogencarbonat, Pottasche oder Ammoniumcarbonat erfolgen.

Die Polymerisation wird üblicherweise im Temperaturbereich von 10°C bis 80°C durchgeführt. Die gewählte Temperatur richtet sich stark nach der Art des verwendeten Initiators. Man erhält einheitliche, sedimentationsstabile, koagulatfreie Wasser-in-Öl-Emulsionscopolymerisate. Die mittlere Teilchengröße der Polymerteilchen beträgt 0,1 bis 20, vorzugsweise 0,5 bis 10 µm. Die bei der Polymerisation erhältlichen Wasser-in-Öl-Emulsionscopolymerisate können direkt verwendet werden oder man isoliert sie aus der Wasser-in-Öl-Polymeremulsion nach bekannten Verfahren, z.B. durch Ausfällen mit Alkoholen, nach dem aus der DE-A-39 26 120 beschriebenen Verfahren oder dadurch, daß man die Wasser-in-Öl-Polymeremulsionen in Gegenwart von 1 bis 20 Gew.-%, bezogen auf die Polymeren, an agglomerierend wirkenden Polyalkylenglykolen azeotrop unter Agglomeration der Primärteilchen der Polymeremulsionen entwässert und die agglomerierten Polymerteilchen isoliert. Agglomerierend wirkende Polyalkylenglykole sind beispielsweise Anlagerungsprodukte von C₂- bis C₄-Alkylenoxiden an Alkohole, Phenole, Amine oder Carbonsäuren, wobei die Anlagerungsprodukte mindestens 2 Alkylenoxideinheiten einpolymerisiert enthalten. Die agglomerierten Polymerteilchen der Wasser-in-Öl-Polymeremulsion werden beispielsweise abfiltriert oder abzentrifugiert und von anhaftenden Lösemitteln befreit.

Die erfindungsgemäßen Copolymerisate sind auf Grund des Gehalts an einpolymerisierten Monomeren der Komponente (c) vernetzt und weisen auf Grund des Gehalts an einpolymerisierten Monomeren der Komponente (b) vernetzbare Gruppen auf. Sofern man die erfindungsgemäßen Copolymerisate auf Temperaturen von mehr als 80°C, bevorzugt 120 bis 150°C erhitzt, reagieren die in das Copolymerisat einpolymerisierten Monomeren der Gruppe (b) und führen zu einer weiteren Vernetzung der Copolymerisate bzw. zu einer Reaktion der Copolymerisate mit anderen Reaktionspartnern, z.B. den Hydroxylgruppen von Textilien aus Cellulose, wenn man die erfindungsgemäßen Verbindungen als Verdickungsmittel von Pigmentdruckpasten einsetzt. Die erfindungsgemäßen Copolymerisate sind allgemein als Verdickungsmittel für wäßrige Systeme anwendbar und werden vorzugsweise als Verdickungsmittel für Textildruckpasten eingesetzt. Pro 1000 Gew.-Teile der Textildruckpaste benötigt man etwa 5 bis 50 Gew.-Teile eines vernetzten und aufgrund des Gehalts an einpolymerisierten Monomeren (b) noch weiter vernetzbaren wasserquellbaren Copolymerisats gemäß der Erfindung. Die Verdickungswirkung der erfindungsgemäßen Copolymerisate tritt direkt nach dem Vermischen der Copolymerisate bzw. der Wasser-in-Öl-Copolymerisatemulsionen mit den anderen Bestandteilen der Textildruckpaste ein. Das Optimum der Verdickungswirkung der erfindungsgemäßen Copolymerisate liegt in dem pH-Wert-Bereich von 5,0 bis 10,0 der Textildruckpasten. Dieser pH-Wert kann durch Zugabe von Natronlauge oder Kalilauge bzw. Ammoniak oder Aminen zur Druckpaste eingestellt werden. Sofern man jedoch bereits bei der Copolymerisation neutralisierte oder partiell neutralisierte Carbonsäuren eingesetzt hat, kann bei der Anwendung der Copolymerisate die optimale Verdickungswirkung auch ohne weitere Neutralisation erreicht werden. Die Teilchengröße der Copolymerisate, die erfindungsgemäß als Verdickungsmittel für Textildruckpasten angewendet werden, liegt vorzugsweise unter 5 µm.

Die erfindungsgemäßen Copolymerisate weisen, als Verdickungsmittel eingesetzt, eine hohe Ergiebigkeit auf und liefern strukturlose und rückstandsfreie Druckpasten. Die Druckpasten enthalten außer den gemäß Erfindung zu verwendenden Verdickungsmittel Farbstoffe bzw. Pigmente sowie gegebenenfalls weitere in der Druckerei übliche Hilfsmittel, wie beispielsweise die für die jeweilige Farbstoffklasse erforderlichen Fixiermittel sowie gegebenenfalls Bindemittel für Pigmente. Textildruckpasten, die die erfindungsgemäßen Copolymerisate als Verdickungsmittel enthalten, können zum Bedrucken von allen natürlichen und synthetischen Fasermaterialien, insbesondere von flächenförmigen Fasermaterialien, wie Geweben, Gewirken, Bändern, Vliesen und Papier verwendet werden, wobei das bedruckte Papier auch für den Transferdruck mit Pigment- und Dispersionsfarbstoffen geeignet ist. Die Fasermaterialien können aus Cellulose, regenerierter Cellulose, Wolle, Seide, Polyester, wie Polyethylentereph- thalat, Polyamid, wie Poly- e-Caprolactam, sauer modifizierten Polyestern und Polyamiden, Polyacrylnitril, Polycarbonaten, Polyolefinen oder Polyurethanen bestehen bzw. diese Fasern in Mischung mit anderen Fasern enthalten. Die jeweils zu verwendende Farbstoffklasse richtet sich nach dem betreffenden Fasertyp. Als Farbstoffe kommen beispielsweise Pigment-, Dispersions-, Küpen-, Säure-, Metallkomplex- oder Reaktivfarbstoffe in Betracht. Beispiele für Farbstoffe sind im Colourindex, 3^{rd} Edition, 1971, Band 4, beschrieben.

Bei den gegebenenfalls den Druckpasten zuzusetzenden üblichen Hilfsmitteln kann es sich beispielsweise um hydrotrope Mittel, wie Harnstoff, Glykole oder Glykolether sowie um Basen, wie Ammoniak, Soda oder Pottasche bzw. Natriumhydrogencarbonat, Natronlauge, Kalilauge oder Alkalispender, wie beispielsweise Natriumtrichloracetat handeln. Weitere Hilfsmittel sind beispielsweise Weinsäure, Zitronensäure oder Milchsäure oder Säurespender, wie Diammoniumphosphat. Außerdem können die Druckpasten oberflächenaktive Substanzen bzw. Emulgatoren, wie nicht ionogene Umsetzungsprodukte von Alkylenoxiden mit Phenolen oder Fettalkoholen sowie anionische Verbindungen enthalten. Im Fall von Pigmentdruckpasten zählen auch übliche Bindemittel zu den gebräuchlichen Hilfsmitteln. Geeignete Bindemittel sind beispielsweise vernetzbare Dispersionen auf Basis von Styrol und Acrylsäureestern, die als vernetzbare Monomere N-Methylol(meth)acrylamid bzw. die entsprechenden veretherten Verbindungen enthalten können sowie Dispersionen auf Basis von Styrol-Butadien-Latices, die ebenfalls N-Methylol-Verbindungen oder die entsprechend veretherten N-Methylol-Verbindungen enthalten können. Als Bindemittel können jedoch auch Dispersionen verwendet werden, die keine selbstvernetztenden Monomeren enthalten, wie sie z.B. in DE-A-35 29 530 beschrieben sind. Andere übliche Hilfsmittel für Druckpasten sind beispielsweise Entschäumer oder Hilfsmittel, die den Griff des bedruckten Materials verbessern.

Das Auftragen der Druckpaste auf die zu bedruckenden Materialien erfolgt mit den im Textildruck üblichen Maschinen, z.B. Flachfilm-, Rouleaux- und Rotationsfilmdruck-Maschinen.

Beim Einsatz der erfindungsgemäßen Copolymerisate in Textildruckpasten kann auf den sonst üblichen Fremdvernetzer (z.B. mit Methanol verethertes Hexahydroxymethylolmelamin) verzichtet werden. Dadurch erhält man Textildrucke, die wesentlich weniger Formaldehyd abspalten als Fremdvernetzer enthaltende Textildrucke. Weitere wichtige Vorteile, die mit dem Einsatz der erfindungsgemäßen Copolymerisate als Verdikkungsmittel in Druckpasten verbunden sind, liegen darin, daß der Griff der Drucke weicher ist, die Drucke in hohem Maße reibbeständig, waschbeständig, lösemittelbeständig, klar, elastisch, nicht klebrig und lichtbeständig sind. Die Drucke sind besonders konturenscharf, egal, farbstark und brillant.

Die Textildrucke werden nach bekannten anwendungstechnischen Kriterien bewertet, von denen die wichtigsten im folgenden kurz beschrieben sind.

### Reibechtheiten:

Die Trocken- und Naßreibechtheiten werden nach DIN 54 021 bestimmt. Dabei wird jeweils in ein sogenanntes Crockmeter ein weißes Stück Stoff eingespannt und nach zehnmaligem Reiben die Intensität der Anfärbung des Stoffs nach einer fünfstufigen Notenskala mit Note 1 als schlechtester und Note 5 als bester Note beurteilt. Note 1 bedeutet sehr starken Abrieb, Note 5 nur einen sehr geringen Abrieb.

### Waschechtheiten:

Der Druck wird einer fünfmaligen Waschmaschinenwäsche bei 60°C mit einem handelsüblichen Vollwaschmittel unterzogen. Die Bewertung erfolgt nach einer internen fünfteiligen Notenskala mit Note 1 als schlechtester und Note 5 als bester Note. Note 1 bedeutet im Vergleich zur nicht gewaschenen Ware einen starken Verlust an Farbstärke, Note 5 einen sehr geringen Verlust.

### Bürstwäsche:

Die Prüfung erfolgt nach einer in der Broschüre "Helizarin® System im Textildruck", Auflage 11.69, Seite 50 (Technisches Schrifttum der BASF) als Helizarin Wäsche II beschriebene Methode. Dabei wird ein Druck zunächst in einer schwach alkalischen Waschflotte gekocht und danach insgesamt 50 mal mit einer Perlonbürste gebürstet. Die Bewertung wird nach einer internen, fünfstufigen Notenskala durchgeführt, bei der Note 1 einen sehr starken Abrieb und Note 5 nur einen sehr geringen Abrieb bedeutet.

### Formaldehydbestimmungen

Die Formaldehydbestimmungen erfolgen nach den bekannten Bestimmungsmethoden Law 112, AATCC-112, Shirley I (siehe z.B. F. Reinert "Neuester Stand der Vernetzer für die Pflegeleichtausrüstung von cellulosehaltigen Textilien" in Textilveredlung, 25 (1990) Nr. 10, S. 322 - 327).

Die in den Beispielen angegebenen Teile sind Gewichtsteile, die Angaben in Prozent bedeuten Gewichtsprozent. Die mittleren Teilchengrößen der Polymerisate stammen aus Aufnahmen mit dem Rasterelektronenmikroskop. Die Bestimmung wurde an trockenen Polymerisatpulvern durchgeführt. Der Wassergehalt der Polymerisate lag dabei unter 8 Gew.-%. In den Beispielen wurden unter anderem folgende Stoffe verwendet:

### Wasser-in-Öl-Emulgator 1

Dieser Emulgator wurde hergestellt durch Umsetzung von
(A) Oleylalkohol mit Epichlorhydrin im Molverhältnis 1:1 zu Oleylglycidylether,
(B) Reaktion des Oleylglycidylethers mit Glycerin im Molverhältnis 1:1 in Gegenwart von BF₃-Phosphorsäure bei einer Temperatur von 80°C und Entfernen des Katalysators mit Hilfe eines basischen Ionenaustauschers und
(C) Ethoxylierung des Reaktionsprodukts (B) mit 2 mol Ethylenoxid.

Die Herstellung von Emulgatoren dieses Typs ist beispielsweise aus der DE-B-25 57 324 bekannt.

### Öl-in-Wasser-Emulgator 1

Hierbei handelt es sich um das Additionsprodukt von 8 mol Ethylenoxid an 1 mol Nonylphenol mit einem HLB-Wert von 12,5 nach W.C. Griffin, J. Soc. Cosmetic Chemists, Band 1, 311 (1949).

### Beispiele

### Allgemeine Vorschrift zur Herstellung der Wasser-in-Öl-Polymeremulsionen

In einem 2 1 fassenden Polymerisationsbehälter, der mit Ankerrührer, Thermometer, Stickstoffeinlaß- und -auslaß versehen ist, werden die in der Tabelle beschriebenen wäßrigen Monomerlösungen vorgelegt und mit 25 % wäßriger Ammoniaklösung auf einen pH-Wert von jeweils 8,0 eingestellt. Zu der klaren Lösung gibt man dann jeweils 250 g eines Kohlenwasserstofföls mit einem Siedebereich von 192 bis 254°C, das zu 84 % aus gesättigten aliphatischen und zu 16 % aus gesättigten naphthenischen Kohlenwasserstoffen besteht, 20 g des oben beschriebenen Wasser-in-Öl-Emulgators 1 und 9 g des oben beschriebenen Öl-in-Wasser-Emulgators 1. Die polymerisierbare Mischung wird danach unter Zugabe von 0,054 g 2,2'-Azobis(2-amidinopropan)dihydrochlorid 1 Stunde bei Raumtemperatur in einem schwachen Stickstoffstrom bei einer Rührgeschwindigkeit von 400 UpM emulgiert. Die Drehzahl des Rührers wird dann auf 200 UpM abgesenkt, das Reaktionsgemisch auf 55 bis 60°C erwärmt und innerhalb dieses Temperaturbereichs im Verlauf von 1,5 Stunden polymerisiert. Danach fügt man 0,054 g 2,2'-Azobis(2-amidinopropan)dihydrochlorid zu und hält das Reaktionsgemisch zur Nachpolymerisation von restlichen Monomeren noch 2 Stunden bei 65°C. Man erhält in allen Fällen eine quellkörperfreie, sedimentationsstabile, vernetzbare Wasser-in-Öl-Polymeremulsion, die bereits vernetzte Polymerteilchen aufweist und deren Polymerteilchen einen mittleren Durchmesser von 0,5 bis 3 µm haben.

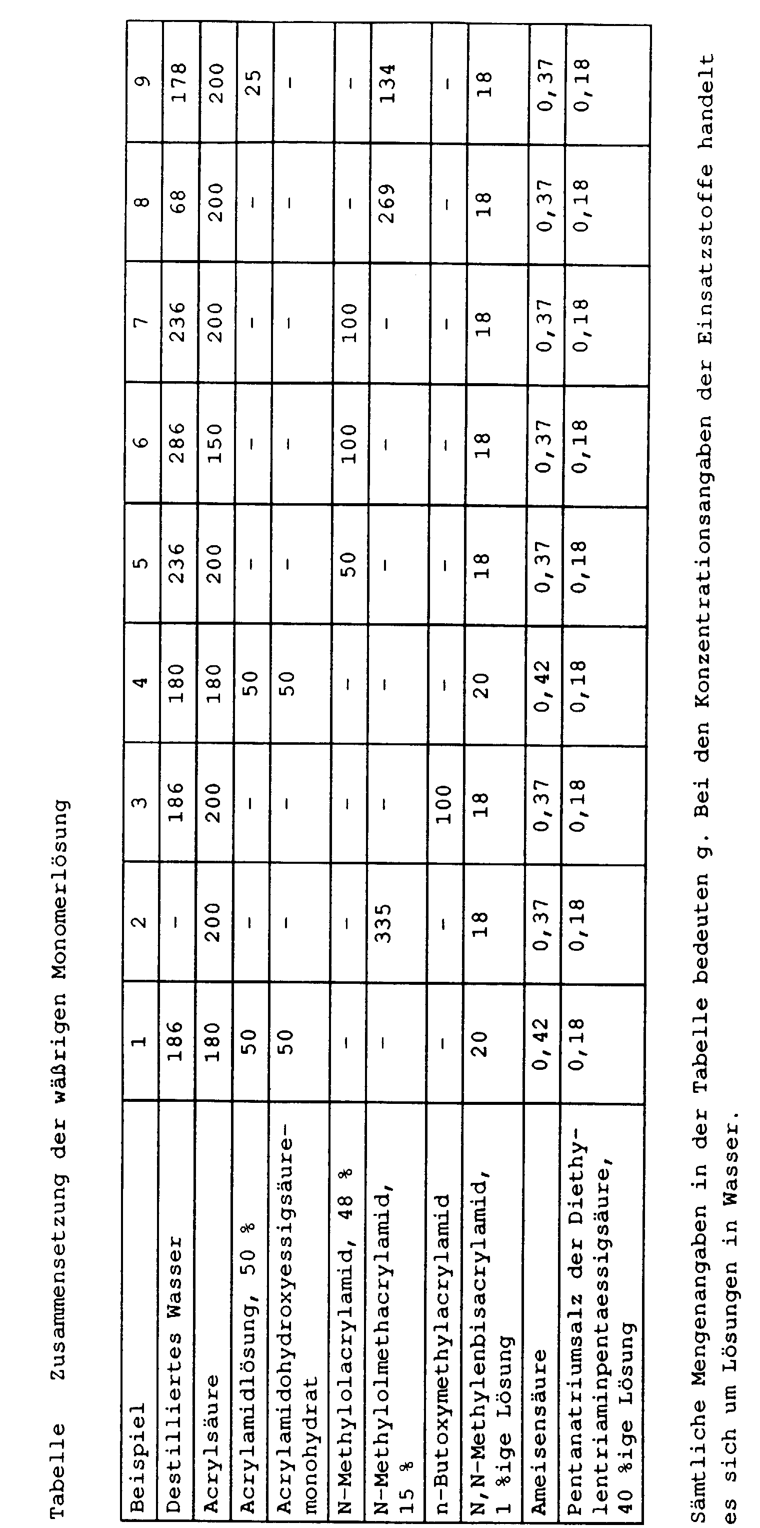

### Anwendungstechnische Beispiele

### Beispiel 10

- 41 g: der gemäß Beispiel 7 hergestellten Wasser-in-Öl-Polymeremulsion werden eingerührt in eine Mischung aus
- 834 g: Trinkwasser
- 100 g: eines handelsüblichen Bindemittels auf Basis einer 40 %igen Copolymerisatdispersion aus Butylacrylat, Styrol und N-Methylolmethacrylamid. Der Ansatz wird vier Minuten mit einem Schnellrührer bei 10000 Umdrehungen pro Minute gerührt. Danach gibt man
- 5 g: eines handelsüblichen Weichmachers auf Basis eines Polydimethylsiloxyans und
- 20 g: des blauen Pigmentfarbstoffs der Colour Index Nr. 74160 zu und rührt nochmals eine Minute bei 5000 Umdrehungen pro Minute.

Die erhaltene Druckpaste wird anschließend mit Hilfe einer Flachfilmdruckschablone auf ein Gewebe aus Zellwolle gedruckt. Dann wird 2 Minuten bei 100°C getrocknet und bei 150°C mit Heißluft fixiert. Man erhält einen farbstarken brilliantblauen Druck mit guter Egalität, scharfen Konturen, weichem Griff, guten Trockenreinigungsechtheiten, guten Trocken- und Naßreibechtheiten sowie guten Wasch- und Bürstwasch-Echtheiten. Der Druck ist außerdem sehr formaldehydarm.

| | |
|---|---|
| Reibechtheit trocken: | Note 4 |
| Reibechtheit naß: | Note 5 |
| Waschechtheit: | Note 4 |
| Bürstwäsche: | Note 4 |
| Formaldehydwerte: | |
| Law 112 | 50 ppm |
| AATCC-112 | 138 ppm |
| Shirley I | 29 ppm |

### Vergleichsbeispiel 1

Wiederholt man Beispiel 10 mit dem Unterschied, daß man anstelle des dort angegebenen Verdickungsmittels 46 g eines gemäß DE-B-36 41 700, Beispiel 1, hergestellten Verdickers aus Acrylsäure, Acrylamid und Methylenbisacrylamid einsetzt, so erhält man einen blauen Druck, der bei vergleichbar niedrigen Formaldehydwerten deutlich schlechtere Trocken- und Naßreibechtheiten sowie deutlich schlechtere Wasch- und Bürstwaschechtheiten aufweist.

| | |
|---|---|
| Reibechtheit trocken: | Note 3 |
| Reibechtheit naß: | Note 2 |
| Waschechtheit: | Note 4 |
| Bürstwäsche: | Note 3 |
| Formaldehydwerte: | |
| Law 112 | 69 ppm |
| AATCC-112 | 133 ppm |
| Shirley I | 29 ppm |

### Vergleichsbeispiel 2

Wiederholt man das Vergleichsbeispiel 1 mit dem Unterschied, daß man zusätzlich noch 10 g eines handelsüblichen Fixierers auf Basis eines Hexamethoxymethylmelamins einsetzt, so erhält man einen Druck mit besserer Naßreibechtheit sowie besserer Wasch- und Bürstwaschechtheit als der gemäß Vergleichsbeispiel 1 hergestellte Druck bei härterem Griff und wesentlich höheren Formaldehydwerten.

Der nach Vergleichsbeispiel 2 hergestellte Druck weist bei wesentlich höheren Formaldehydwerten bezüglich Wasch- und Bürstwaschechtheiten das gleiche Niveau auf wie der gemäß Beispiel 10 hergestellte Druck, hat jedoch den Nachteil der schlechteren Trocken- und Naßreibechtheit.

| | |
|---|---|
| Reibechtheit trocken: | Note 3 |
| Reibechtheit naß: | Note 4 |
| Waschechtheit: | Note 4 |
| Bürstwäsche: | Note 4 |
| Formaldehydwerte: | |
| Law 112 | 425 ppm |
| AATCC-112 | 1669 ppm |
| Shirley I | 463 ppm |

### Beispiel 11

| | |
|---|---|
| 42 g | der gemäß Beispiel 2 hergestellten Wasser-in-Öl-Polymeremulsion werden eingerührt in eine Mischung aus |
| | |
| 828 g | Trinkwasser |
| 100 g | eines handelsüblichen Bindemittels auf Basis einer handelsüblichen, methylolgruppenfreien 45 %igen Copolymerisatdispersion aus Butylacrylat, Acrylnitril und Hydroxyethylacrylat. Der Ansatz wird vier Minuten mit einem Schnellrührer bei 10000 Umdrehungen pro Minute gerührt. Danach gibt man |
| | |
| 10 g | eines handelsüblichen Weichmachers auf Basis eines Polydimethylsiloxans sowie |
| | |
| 20 g | des roten Pigmentfarbstoffs der Colour Index Nr. 12485 zu und rührt nochmals eine Minute bei 5000 Umdrehungen pro Minute. |

Die erhaltene Druckpaste wird anschließend mit Hilfe einer Flachfilmdruckschablone auf ein Mischgewebe aus 65 % Polyester und 35 % Baumwolle gedruckt. Dann wird 2 Minuten bei 100°C getrocknet und 5 Minuten bei 150°C mit Heißluft fixiert. Man erhält einen farbstarken brilliantroten Druck mit guter Egalität, scharfen Konturen, weichem Griff und guten Trocken- und Naßreibechtheiten sowie guten Wasch-, Bürstwasch- und Trockenreinigungs-Echtheiten. Der Druck ist sehr formaldehydarm.

| | |
|---|---|
| Reibechtheit trocken: | Note 3 |
| Reibechtheit naß: | Note 4 |
| Waschechtheit: | Note 4 |
| Bürstwäsche: | Note 3 |
| Formaldehydwerte: | |
| Law 112 | 3 ppm |
| AATCC-112 | 3 ppm |
| Shirley I | 14 ppm |

Das für die Versuche verwendete, unbedruckte, nicht fixierte Originalgewebe weist folgende Formaldehydwerte auf:

| | |
|---|---|
| Law 112 | 3 ppm |
| AATCC-112 | 3 ppm |
| Shirley I | 12 ppm |

### Vergleichsbeispiel 3

Wiederholt man Beispiel 11 mit dem Unterschied, daß man anstelle des dort angegebenen Verdickungsmittels 46 g eines gemäß DE-B-36 41 700, Beispiel 2 hergestellten Verdickers einsetzt, so erhält man einen unschärferen und unegaleren Druck mit ähnlich niedrigen Formaldehydwerten, der jedoch deutlich schlechtere Trocken- und Naßreibechtheiten sowie schlechtere Wasch- und Bürstwaschechtheiten aufweist.

| | |
|---|---|
| Reibechtheit trocken: | Note 3 |
| Reibechtheit naß: | Note 1 |
| Waschechtheit: | Note 1 |
| Bürstwäsche: | Note 1 |
| Formaldehydwerte: | |
| Law 112 | 2 ppm |
| AATCC-112 | 4 ppm |
| Shirley I | 13 ppm |

### Vergleichsbeispiel 4

Wiederholt man das Vergleichsbeispiel 3 mit dem Unterschied, daß man zusätzlich noch 5 g eines handelsüblichen Fixierers auf Basis eines Hexamethoxymethylmelamins einsetzt, so erhält man einen Druck, der eine vergleichbare Trocken-, und Bürstwaschechtheit wie der gemäß Beispiel 11 hergestellten Druck hat, jedoch die Nachteile der schlechteren Naßreib- und Waschechtheit, der geringeren Konturenschärfe und Egalität besitzt und wesentlich höhere Formaldehydwerte aufweist.

| | |
|---|---|
| Reibechtheit trocken: | Note 3 |
| Reibechtheit naß: | Note 2 |
| Waschechtheit: | Note 2 |
| Bürstwäsche: | Note 3 |
| Formaldehydwerte: | |
| Law 112 | 205 ppm |
| AATCC-112 | 983 ppm |
| Shirley I | 302 ppm |

### Beispiel 12

In einem Kunststoffbecher von 2 1 Inhalt werden

| | |
|---|---|
| 816 g | Trinkwasser vorgelegt. Während das Wasser mit einem von Hand bewegten breiten Kunststoffspatel gerührt wird, gießt man langsam |
| | |
| 44 g | der gemäß Beispiel 3 hergestellten Wasser-in-Öl-Polymeremulsion ein. Der Ansatz beginnt bereits nach einer Minute zu verdicken. Dann wird zwei Minuten mit einem Schnellrührer bei 10000 Umdrehungen pro Minute gerührt. Man erhält eine homogene, strukturlose hochviskose Paste. Anschließend gibt man noch |
| | |
| 15 g | Harnstoff, |
| | |
| 120 g | eines handelsüblichen Bindemittels auf Basis einer 45 %igen Copolymerisatdispersion aus Butylacrylat, Styrol und N-Methylolmethacrylamid und |
| | |
| 20 g | des blauen Pigmentfarbstoffs der Colour Index Nr. 74160 zu und rührt nochmals eine Minute bei 10000 Umdrehungen pro Minute. |

Die erhaltene Druckpaste wird anschließend mit Hilfe einer Flachfilmdruckschablone auf ein Mischgewebe aus 65 % Polyester und 35 % Baumwolle gedruckt. Dann wird 2 Minuten bei 100°C getrocknet und 5 Minuten bei 150°C mit Heißluft fixiert. Man erhält einen blauen Druck mit weichem Griff, guter Egalität, scharfen Konturen und guten Trocken- und Naßreibechtheiten sowie guten Wasch-, Bürstwasch- und Trockenreinigungs-Echtheiten. Der Druck ist sehr formaldehydarm.

### Vergleichsbeispiel 5

Wiederholt man Beispiel 12 mit dem Unterschied, daß man anstelle des dort angegebenen Verdickungsmittels 46 g eines gemäß DE-B-36 41 700, Beispiel 2 hergestellten Verdickers einsetzt, so erhält man einen Druck mit schlechterem Konturenzustand und von geringer Egalität, der bei etwas höheren Formaldehydwerten schlechtere Trocken- und Naßreibechtheiten sowie deutlich schlechtere Wasch- und Bürstwaschechtheiten aufweist.

### Vergleichsbeispiel 6

Wiederholt man das Vergleichsbeispiel 5 mit dem Unterschied, daß man zusätzlich noch 5 g eines handelsüblichen Fixierers auf Basis eines Hexamethoxymethylmelamins einsetzt, so erhält man im Vergleich zu Beispiel 12 einen Druck mit geringerer Egalität und etwas schlechterem Konturenstand, jedoch härterem Griff und bei vergleichbaren Echtheiten deutlich höheren Formaldehydwerten.

### Beispiel 13

| | |
|---|---|
| 10 g | des gemäß Beispiel 4 hergestellten Copolymerisats werden durch azeotropes Entwässern in Gegenwart von 5 % Polyethylenglykol eines Molekulargewichts von 300 in Form eines Pulvers isoliert und unter Rühren in |
| | |
| 590 g | Trinkwasser gegeben. Der Ansatz beginnt bereits nach wenigen Sekunden zu verdicken. Anschließend wird zwei Minuten mit einem Schnellrührer bei 8000 Umdrehungen pro Minute gerührt. In den homogenen viskosen Ansatz werden unter Rühren bei 8000 Umdrehungen pro Minute innerhalb einer Minute |
| | |
| 250 g | Benzin einemulgiert. Dann rührt man nochmals eine Minute bei 1000 Umdrehungen pro Minute und fügt |
| | |
| 120 g | eines handelsüblichen Bindemittels auf Basis einer 45 %igen Copolymerisatdispersion aus Butadien, Styrol, Acrylnitril und N-Methylolmethacrylamid sowie |
| | |
| 30 | Teile des roten Pigmentfarbstoffs der Colour Index Nr. 12475 zu. Das Gemisch wird nochmals zwei Minuten bei 10000 Umdrehungen pro Minute gerührt. |

Die erhaltene Druckpaste wird anschließend mit Hilfe einer Rouleauxdruckmaschine auf ein Baumwollgewebe gedruckt. Der Druck wird 3 Minuten bei 100°C getrocknet und 5 Minuten bei 150°C mit Heißluft fixiert. Man erhält einen brillianten, farbstarken, egalen, konturenscharfen roten Druck mit guten Trocken- und Naßreibechtheiten sowie guten Wasch-, Bürstenwasch- und Trockenreinigungs-Echtheiten und niedrigem Formaldehydgehalt.

### Beispiel 14

| | |
|---|---|
| 42 g | der gemäß Beispiel 5 hergestellten Wasser-in-Öl-Polymeremulsion werden unter Rühren in |
| | |
| 768 g | Trinkwasser gegeben. Anschließend gibt man |
| | |
| 150 g | eines handelsüblichen Bindemittels auf Basis einer 40 %igen Copolymerisatdispersion aus Butylacrylat, Acrylnitril, Styrol und N-Methylolmethacrylamid, |
| | |
| 10 g | eines handelsüblichen Weichmachers auf Basis eines Polydimethylsiloxans sowie |
| | |
| 30 g | des roten Pigmentfarbstoffs der Colour Index Nr. 12485 zu. |

Dann rührt man das Gemisch drei Minuten bei 10000 Umdrehungen pro Minute. Die erhaltene homogene Druckpaste wird anschließend mit Hilfe einer Flachfilmdruckmaschine auf ein Baumwollgewebe gedruckt. Dann wird 3 Minuten bei 100°C getrocknet und 5 Minuten bei 155°C mit Heißluft fixiert. Man erhält einen brillianten, farbstarken, sehr egalen, konturenscharfen, weichen formaldehydfreien roten Druck mit besonders guten Trocken- und Naßreibechtheiten sowie guten Wasch-, Bürstwasch- und Trockenreinigungs-Echtheiten.

### Beispiel 15

Beispiel 14 wird wiederholt mit der einzigen Ausnahme, daß anstelle des dort angegebenen Verdickungsmittels 51 g der gemäß Beispiel 6 hergestellten Wasser-in-Öl-Polymeremulsion verwendet werden. Der Druck wird bei 155°C mit Heißluft fixiert. Man erhält einen brillianten, farbstarken, sehr egalen, konturenscharfen, weichen formaldehydarmen roten Druck mit besonders guten Trocken- und Naßreibechtheiten, sowie guten Wasch-, Bürstwasch- und Trockenreinigungsechtheiten.

### Beispiel 16

Beispiel 14 wird wiederholt mit dem Unterschied, daß anstelle des dort angegebenen Verdickungsmittels 47 g der gemäß Beispiel 2 hergestellten Wasser-in-Öl-Polymeremulsion verwendet werden. Die Eigenschaften des Drucks entsprechen denen von Beispiel 14.

### Beispiel 17

Beispiel 14 wird mit dem Unterschied wiederholt, daß anstelle des dort angegebenen Verdickungsmittels 48 g der gemäß Beispiel 8 hergestellten Wasser-in-Öl-Polymeremulsion verwendet werden. Die Eigenschaften des Drucks entsprechen denen von Beispiel 14.

### Beispiel 18

Beispiel 14 wird wiederholt mit dem Unterschied, daß anstelle des dort angegebenen Verdickungsmittels 42 g der gemäß Beispiel 8 hergestellten Wasser-in-Öl-Polymeremulsion sowie 15 g Harnstoff oder Ethylenharnstoff verwendet werden. Man erhält einen brillianten, farbstarken, sehr egalen, konturenscharfen, weichen, sehr formaldehydarmen roten Druck mit guten Trocken- und Naßreibechtheiten, sowie guten Wasch-, Bürstwasch- und Trockenreinigungsechtheiten.

## Patentansprüche

1. Verfahren zur Herstellung von vernetzten Copolymerisaten auf der Basis von Acrylsäure oder Methacrylsäure, dadurch gekennzeichnet, daß man
(a) 50 bis 99 Gewichtsteile Acrylsäure und/oder Methacrylsäure,
(b) 1 bis 50 Gewichtsteile mindestens einer Verbindung der Formel 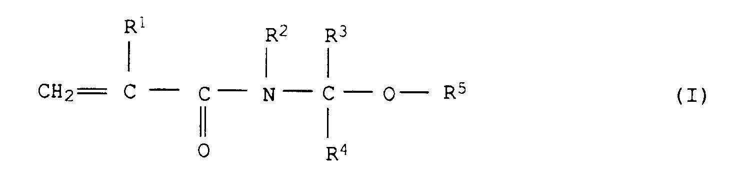 in der
R¹ = H, CH₃
R² = H, CH₃, 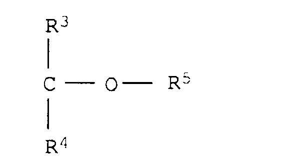
R³,R⁴ = H, CH₃, OH, O-R⁵, COOH,
R⁵ = H, C₁- bis C₈-Alkyl, -CH₂-COOH, -(CH₂-CH₂-O)ₙ-H,
n = 1 bis 20 bedeuten,
(c) 50 bis 10000 ppm, bezogen auf die Monomeren (a) und (b), eines mindestens bifunktionellen Vernetzers und
(d) 0 bis 49 Gew.-Teilen anderen monoethylenisch ungesättigten Monomeren
in der wäßrigen Phase einer Wasser-in-Öl-Emulsion in Gegenwart mindestens eines Wasser-in-Öl-Emulgators und mindestens eines Radikale bildenden Polymerisationsinitiators zu Wasser-in-Öl-Polymeremulsionen mit einem mittleren Durchmesser der Polymerteilchen von 0,1 bis 20 µm polymerisiert.

2. Verfahren nach Anspruch 1, dadurch gekennzeichnet, daß man als Monomere (b) N-Methylolacrylamid, N-Methylolmethacrylamid und/oder die mit einwertigen C₁- bis C₄-Alkoholen partiell oder vollständig veretherten N-Methylol(meth)acrylamide einsetzt.

3. Verwendung von Copolymerisaten, die erhältlich sind durch Copolymerisation von
(a) 50 bis 99 Gewichtsteile Acrylsäure und/oder Methacrylsäure,
(b) 1 bis 50 Gewichtsteile mindestens einer Verbindung der Formel 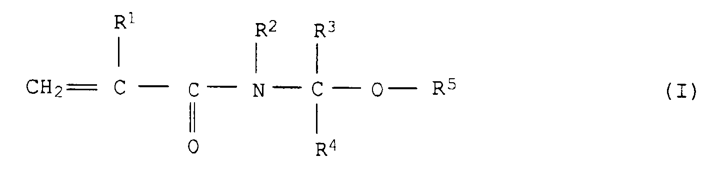 in der
R¹ = H, CH₃
R² = H, CH₃, 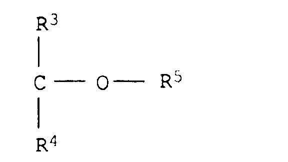
R³,R⁴ = H, CH₃, OH, O-R⁵, COOH,
R⁵ = H, C₁- bis C₈-Alkyl, -CH₂-COOH, -(CH₂-CH₂-O)ₙ-H,
n = 1 bis 20 bedeuten,
(c) 50 bis 10000 ppm, bezogen auf die Monomeren (a) und (b), eines mindestens bifunktionellen Vernetzers und
(d) 0 bis 49 Gew.-Teilen anderen monoethylenisch ungesättigten Monomeren
in der wäßrigen Phase einer Wasser-in-Öl-Emulsion in Gegenwart mindestens eines Wasser-in-Öl-Emulgators und mindestens eines Radikale bildenden Polymerisationsinitiators zu Wasser-in-Öl-Polymeremulsionen mit einem mittleren Durchmesser der Polymerteilchen von 0,1 bis 20 µm
als Verdickungsmittel für Textildruckpasten.

## Claims

1. A process for preparing crosslinked copolymers based on acrylic acid or methacrylic acid, characterized in that it comprises polymerizing
(a) from 50 to 99 parts by weight of acrylic acid and/or methacrylic acid,
(b) from 1 to 50 parts by weight of at least one compound of the formula 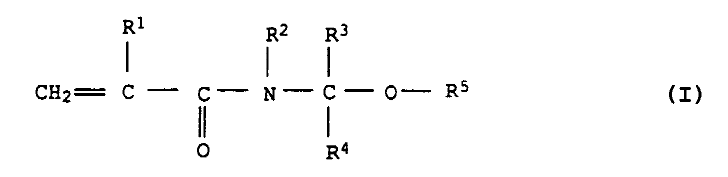 wherein
R¹ = H, CH₃,
R² = H, CH₃, 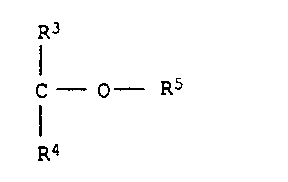
R³, R⁴ = H, CH₃, OH, O-R⁵, COOH,
R⁵ = H, C₁-C₈-alkyl, -CH₂-COOH, -(CH₂-CH₂-O)ₙ-H,
n = 1 - 20,
(c) from 50 to 10,000 ppm, based on the monomers (a) and (b), of an at least bifunctional crosslinker, and
(d) from 0 to 49 parts by weight of other monoethylenically unsaturated monomers
in the aqueous phase of a water-in-oil emulsion in the presence of at least one water-in-oil emulsifier and at least one free radical polymerization initiator to give a water-in-oil polymer emulsion having an average polymer particle diameter of from 0.1 to 20 µm.

2. A process as claimed in claim 1, characterized in that monomers (b) are selected from N-methylolacrylamide, N-methylolmethacrylamide and the N-methylol(meth)-acrylamides which have been partially or completely etherified with monohydric C₁-C₄-alcohols.

3. The use of copolymers obtainable by copolymerization of
(a) from 50 to 99 parts by weight of acrylic acid and/or methacrylic acid,
(b) from 1 to 50 parts by weight of at least one compound of the formula 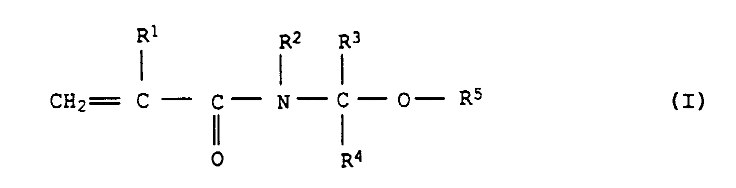 wherein
R¹ = H, CH₃,
R² = H, CH₃, 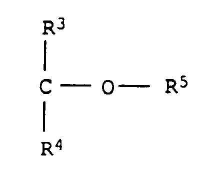
R³, R⁴ = H, CH₃, OH, O-R⁵, COOH,
R⁵ = H, C₁-C₈-alkyl,-CH₂-COOH,-(CH₂-CH₂-O)ₙ-H,
n = 1 - 20,
(c) from 50 to 10,000 ppm, based on the monomers (a) and (b), of an at least bifunctional crosslinker, and
(d) from 0 to 49 parts by weight of other monoethylenically unsaturated monomers
in the aqueous phase of a water-in-oil emulsion in the presence of at least one water-in-oil emulsifier and at least one free radical polymerization initiator to give a water-in-oil polymer emulsion having an average polymer particle diameter of from 0.1 to 20 µm,
as thickeners for textile print pastes.

## Revendications

1. Procédé de préparation de copolymères réticulés à base d'acide acrylique ou méthacrylique, caractérisé en ce que l'on polymérise
(a) 50 à 99 parties en poids d'acide acrylique et/ou méthacrylique,
(b) 1 à 50 parties en poids d'au moins un composé de formule 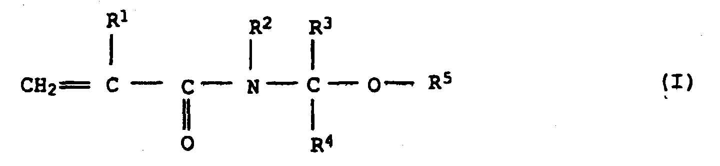 dans laquelle
R¹ = H, CH₃
R² = H, CH₃, 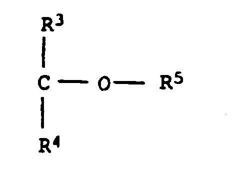
R³, R⁴ = H, CH₃, OH, O-R⁵_{,} COOH,
R⁵ = H, alkyle en C₁-C₈,-CH₂-COOH_{,}-(CH₂-CH₂-O)ₙ-H,
n = 1 à 20
(c) 50 à 10 000 ppm, par rapport aux monomères (a) et (b), d'un agent réticulant au moins bifonctionnel et
d) 0 à 49 parties en poids d'autres monomères à insaturation monoéthylénique
dans la phase aqueuse d'une émulsion eau-dans-huile en présence d'au moins un tensioactif eau-dans-huile et d'au moins un amorceur de polymérisation formant des radicaux, pour obtenir une émulsion de polymères eau-dans-huile ayant un diamètre moyen de particules de polymères de 0,1 à 20 µm.

2. Procédé selon la revendication 1, caractérisé en ce que l'on utilise en tant que monomère (b) du N-méthylolacrylamide, du N-méthylol-méthacrylamide et/ou des N-méthylol(méth)acrylamides éthérifiés de façon partielle ou totale avec des alcools en C₁-C₄ monofonctionnels.

3. Utilisation de copolymères pouvant être obtenus par copolymérisation de
(a) 50 à 99 parties en poids d'acide acrylique et/ou méthacrylique,
(b) 1 à 50 parties en poids d'au moins un composé de formule 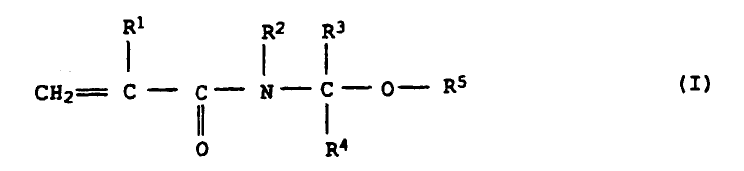 dans laquelle
R¹ = H, CH₃
R² = H, CH₃, 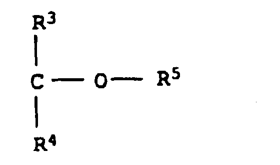
R³, R⁴ = H, CH₃, OH, O-R⁵, COOH,
R⁵ = H, alkyle en C₁-C₈, -CH₂-COOH, -(CH₂-CH₂-O)ₙ-H,
n = 1 à 20
(c) 50 à 10 000 ppm, par rapport aux monomères (a) et (b), d'un agent réticulant au moins bifonctionnel et
(d) 0 à 49 parties en poids d'autres monomères à insaturation monoéthylénique
dans la phase aqueuse d'une émulsion eau-dans-huile en présence d'au moins un tensioactif eau-dans-huile et d'au moins un amorceur de polymérisation formant des radicaux, pour obtenir une émulsion de polymères eau-dans-huile ayant un diamètre moyen de particules de polymères de 0,1 à 20 µm,
en tant qu'agent épaississant pour des pâtes d'impression pour textiles.
